# EUROPÄISCHE PATENTSCHRIFT

(11) **EP 1 526 303 B1**
(45) Veröffentlichungstag und Bekanntmachung des Hinweises auf die Patenterteilung: **20.09.2006**
(21) Anmeldenummer: 04010641.1
(22) Anmeldetag: 05.05.2004
(51) Int. Cl.: F16F 13/26

(54) **Hydrolager**
Hydraulically-damped support
Support à amortissement hydraulique

(30) Priorität: 22.10.2003 DE 10348964
(43) Veröffentlichungstag der Anmeldung: 27.04.2005
(73) Patentinhaber: Carl Freudenberg KG, 69469 Weinheim (DE)
(72) Erfinder: Simuttis, Arnold, Dr., 55545 Bad Kreuznach (DE)

(56) Entgegenhaltungen:
- EP-A- 0 395 795
- EP-A- 0 939 243
- DE-A1- 19 833 458
- FR-A- 2 629 542
- US-B1- 6 276 672

## Beschreibung

### Technisches Gebiet

Die Erfindung betrifft ein Hydrolager, umfassend ein Traglager und ein Auflager die durch einen im Wesentlichen hohlkegelförmig gestalteten Federkörper aus elastomerem Werkstoff miteinander verbunden sind und einen Arbeits- und einen Ausgleichsraum begrenzen, wobei der Arbeits- und der Ausgleichsraum einander in Richtung der eingeleiteten Schwingungen benachbart zugeordnet sind und mit Dämpfungsflüssigkeit gefüllt und auf den einander zugewandten Seiten durch eine Trennwand mit zumindest einer Durchbrechung voneinander getrennt sind, wobei die Durchbrechung den Arbeitsraum und den Ausgleichsraum strömungsleitend verbindet, wobei der Ausgleichsraum auf der der Trennwand abgewandten Seite durch einen im Wesentlichen drucklos Volumen aufnehmenden Rollbalg aus elastisch nachgiebigem Werkstoff begrenzt ist wobei der Durchtrittsquerschnitt der Durchbrechung durch ein von einem Antrieb kontinuierlich stufenlos verstellbares Stellelement kontinuierlich stufenlos verstellbar ist, wobei das Stellelement eine Selbsthemmung aufweist, wobei das Stellelement eine Spindel und eine auf der Spindel beweglich angeordnete Spindelmutter umfaßt und wobei die Spindel und die Spindelmutter durch ein Bewegungsgewinde mit Selbsthemmung miteinander verbunden sind.

### Stand der Technik

Ein solches Hydrolager ist aus der EP 0 395 795 A1 bekannt. Das vorbekannte Hydrolager umfaßt einen Dämpfungskanal, der in seiner Länge und/oder seinem Querschnitt von außen einstellbar bzw. nachstellbar ist. Dazu ist die Trennwand quer zur Längsachse geteilt ausgebildet, wobei die beiden Hälften der Trennwand zusammen die Begrenzungswände des Dämpfungskanals bilden. Eine Hälfte ist fest eingespannt, während die zweite Hälfte axial beweglich und in Umfangsrichtung verdrehbar gelagert ist. Die Vorrichtung zur Verdrehung der zweiten Hälfte ist so ausgebildet, dass die axiale Beweglichkeit der zweiten Hälfte unabhängig von der Umfangsbewegung ausführbar ist, wobei die Vorrichtung elektrisch bzw. elektronisch, gegebenenfalls unter Zuhilfenahme einer angepassten Elektronik, angetrieben wird. Die Vorrichtung umfasst einen Gewindebolzen, der durch Verdrehen die zweite Hälfte in Umfangsrichtung bewegt und somit eine Längenänderung des Dämpfungskanals vornimmt. Über eine Hubmutter wird die zweite Hälfte der Trennwand axial bewegt, so dass der Dämpfungskanal in seinem Querschnitt veränderbar ist.

Ein weiteres Hydrolager ist aus der US 6,276,672 B1 bekannt. Das Hydrolager ist umschaltbar ausgebildet und gelangt insbesondere als Motorlager in Kraftfahrzeugen zur Anwendung. Die Trennwand hat in ihrer Mitte eine über ein Stellglied verschließbare Durchtrittsöffnung, einen Arbeits und Ausgleichkammer hydraulisch verbindenden Dämpfungskanal und in einer Ausnehmung eine Membran, welche beidseitig wirksam in der Trennwand vorhandene Öffnungen überdeckt und flüssigkeitsdicht arretierbar ist. Die Membran ist von einer axial verschiebbaren Klemmscheibe überdeckt, die mit Öffnungen im Bereich der Trennwandöffnungen versehen ist und die durch ein Stellglied verschoben die Membran arretiert oder frei gibt. Das Stellglied ist mit einem Mitnehmer versehen, der in das Anschlussstück einer Klemmscheibe hineinragt. Die Bewegung des Stellglieds wird dadurch erreicht, dass der unterhalb einer Schaltfeder liegende Raum mit Unterdruck beaufschlagt wird, so dass die Durchtrittsöffnung frei gegeben wird.

Ein weiteres Hydrolager ist aus der DE 199 02 494 A1 bekannt und umfaßt ein Traglager und ein Auflager, die durch einen im Wesentlichen hohlkegelförmig gestalteten Federkörper aus elastomerem Werkstoff miteinander verbunden sind und einen Arbeits- und einen Ausgleichsraum begrenzen, wobei der Arbeits- und der Ausgleichsraum einander in Richtung der eingeleiteten Schwingungen benachbart zugeordnet und mit Dämpfungsflüssigkeit gefüllt und auf den einander zugewandten Seiten durch eine Trennwand mit zumindest einer Durchbrechung voneinander getrennt sind. Die Durchbrechung in der Trennwand ist als zentrale Ausnehmung ausgebildet und verbindet den Arbeitsraum und den Ausgleichsraum strömungsleitend. Der Ausgleichsraum ist auf der der Trennwand abgewandten Seite durch einen im Wesentlichen drucklos Volumen aufnehmenden Rollbalg aus elastisch nachgiebigem Werkstoff begrenzt und der Durchtrittsquerschnitt durch die Durchbrechung ist durch ein Stellelement variierbar, das durch einem Antrieb betätigbar ist. Der Antrieb ist durch einen Elektromotor gebildet und das Stellelement ist als eine mit dem Wellenende des Elektromotors verbundene Exzenterscheibe ausgeführt.

### Darstellung der Erfindung

Der Erfindung liegt die Aufgabe zugrunde, ein Hydrolager der vorbekannten Art derart weiter zu entwickeln, dass Verunreinigungen vom Gewinde der Spindel zuverlässig ferngehalten werden und eine gute leichtgängige Verstellbarkeit des Stellelements während einer langen Gebrauchsdauer gewährleistet ist.

Diese Aufgabe wird erfindungsgemäß mit dem Merkmalen von Anspruch 1 gelöst. Auf vorteilhafte Ausgestaltungen nehmen die Unteransprüche Bezug.

Zur Lösung der Aufgabe ist es vorgesehen, dass sie Spindel in einem durch eine Dichtung hermetisch abgedichteten Raum angeordnet ist.

Durch die kontinuierlich stufenlose Verstellbarkeit des Stellelements durch den Antrieb kann genau der Durchtrittsquerschnitt durch die Durchbrechung eingestellt werden, der für eine bestmögliche Schwingungsdämfpungisolierung oder -tilgung erforderlich ist; schaltbare Hydrolager, bei denen der Durchtrittsquerschnitt nur zwei Größen aufweist, also entweder maximal offen oder verschlossen ist, weisen derart variable Gebrauchseigenschaften nicht auf.
Durch die Selbsthemmung des Stellelements ist von Vorteil, dass eine unerwünschte, selbsttätige Verstellung ausgeschlossen ist. Die Selbsthemmung ist insbesondere deshalb von Vorteil, weil der Antrieb nur zur kontinuierlich stufenlosen Verstellung des Stellelements eingeschaltet werden muß. Ist die, beispielsweise in einem Kennfeld abgelegte Position des Stellelements, bezogen auf die Durchbrechung erreicht, kann der Antrieb abgeschaltet werden, ohne dass sich die Position des Stellelements während der anschließenden Gebrauchsdauer unerwünscht verändert.
Gelangt als Antrieb beispielsweise ein Elektromotor zur Anwendung, kann die Bestromung des Elektromotors bei Erreichen der gewünschten Position des Stellelements unterbrochen werden. Im Hinblick auf die vielen elektrischen Verbraucher in einem Kraftfahrzeug und dem daraus resultierenden hohen Energieverbrauch, ist eine solche Selbsthemmung des Stellelements von hervorzuhebendem Vorteil; die Betätigung des Antriebs zum Halten der Position des Stellelements, bezogen auf die Durchbrechung, ist durch die Selbsthemmung nicht erforderlich.

Das Stellelement umfaßt eine Spindel und eine auf der Spindel beweglich angeordnete Spindelmutter, wobei die Spindel und die Spindelmutter durch ein Bewegungsgewinde mit Selbsthemmung miteinander verbunden sind. Spindel und Spindelmutter sind einfach und kostengünstig herstellbare Maschinenelemente, Das mit einem derartigen Stellelement versehene Hydrolager ist dadurch einfach und kostengünstig herstellbar und weist während der bestimmungsgemäßen Verwendung eine hohe Zuverlässigkeit auf.

Die Spindel ist in einem durch eine Dichtung hermetisch abgedichteten Raum angeordnet. Hierbei ist von Vorteil, dass Verunreinigungen vom Gewinde der Spindel zuverlässig fern gehalten werden und eine gute, leichtgängige Verstellbarkeit des Stellelements während einer langen Gebrauchsdauer gewährleistet ist.

Die Dichtung kann rollbalgförmig ausgebildet sein und den Raum dichtend überdecken und mit ihrer offenen Stirnseite dichtend mit dem Gehäuse verbunden sein.
Die rollbalgförmig gestaltete Dichtung ist insofern besonders zweckmäßig, als Teile gegeneinander abzudichten sind, die ihre Position relativ zueinander verändern. Zur Abdichtung des Raums ist die Dichtung mit ihrer offenen Stirnseite dichtend mit dem Gehäuse und mit ihrer axial gegenüberliegenden Stirnseite bevorzugt direkt oder indirekt an der Spindelmutter angeordnet. Da sich die Spindelmutter axial in Richtung der Spindel, relativ zum Gehäuse des Antriebs bewegt, muß die Dichtung dieser Bewegung folgen können, ohne beschädigt und/oder zerstört zu werden.

Die Dichtung kann einstückig ineinander übergehend und materialeinheitlich mit dem Rollbalg ausgebildet sein. Der Rollbalg, der den Ausgleichsraum auf der der Trennwand axial abgewandten Seite flüssigkeitsdicht begrenzt, besteht bevorzugt aus einem elastomeren Werkstoff, so dass auch die Dichtung aus diesem Werkstoff besteht. Durch die Einstückigkeit von Rollbalg und Dichtung weist das beanspruchte Hydrolager einen einfachen und teilarmen Aufbau auf, was in fertigungstechnischer und wirtschaftlicher Hinsicht von hervorzuhebendem Vorteil ist. Die Gefahr von Montagefehlern ist durch die Einstückigkeit wesentlich reduziert.

Die Spindelmutter kann flüssigkeitsdicht mit dem Rollbalg verbunden sein. Eine derartige Verbindung kann beispielsweise dadurch erfolgen, dass die Spindelmutter und der Rollbalg vulkanisiert sind oder das die Spindelmutter und der Rollbalg kraft- und/oder formschlüssig verbunden sind. Unabhängig davon, welche Art der Verbindung gewählt wird, stützt diese Verbindung das Spindeldrehmoment ab.
Hinsichtlich eines sortenreinen Recyclings wird einer nicht- stoffschlüssigen Verbindung zwischen Spindelmutter und Rollbalg der Vorzug gegeben.

Die Spindel kann von einer als Schraubendruckfeder ausgebildeten Spiralfeder umschlossen sein, die in axialer Richtung einerseits an der Spindelmutter und in axialer Richtung andererseits am Gehäuse des Antriebs unter elastischer Vorspannung angeordnet ist. Bei Bewegung des Stellelements in Richtung der Durchbrechung und daraus resultierender Reduzierung des Durchtrittsquerschnitts, ist durch die Verwendung der Spiralfeder nur eine vergleichsweise geringe Antriebsleistung des Antriebs erforderlich. Die Verwendung eines kleinen und kostengünstigen Antriebs ist dadurch möglich.
Soll demgegenüber der Durchtrittsquerschnitt der Durchbrechung durch das Stellelement vergrößert werden, arbeitet der Antrieb gegen die Vorspannung der Spiralfeder. Durch die elastische Vorspannung, mit der die Spiralfeder zwischen dem Gehäuse des Antriebs und der Spindelmutter angeordnet ist, wird das konstruktionsbedingte Spiel eines Gewindes überbrückt und die Positionierung des Stellelements, bezogen auf die Durchbrechung, ist besonders genau.

Gemäß einer vorteilhaften Ausgestaltung kann es vorgesehen sein, dass auch die Spiralfeder innerhalb des Raums angeordnet ist. Auch dieses Maschinenelement soll gleichbleibende Gebrauchseigenschaften während der gesamten Gebrauchsdauer aufweisen. Dazu ist es zweckmäßig, Verunreinigungen von der Spiralfeder fernzuhalten und sie zu diesem Zweck innerhalb des abgedichteten Raums anzuordnen.

Zwischen dem Antrieb und dem Stellelement kann ein Getriebe angeordnet sein. Ein Getriebe ist insbesondere dann vorteilhaft, wenn besonders schnell laufende und weniger starke Antriebe zur Anwendung gelangen. Die Betätigung des Stellelements durch den Antrieb muß auch dann einwandfrei gewährleistet sein, wenn sich das Stellelement, bezogen auf die Durchbrechung, in seinen Endanschlagpositionen befindet, das heißt, die Durchbrechung durch das Stellelement vollständig verschlossen oder vollständig offen ist. Das Drehmoment des Antriebs zum Anfahren in die jeweils entgegengesetzte Richtung muß auch dann ausreichen, wenn das Stellelement in diesen Endanschlagpositionen verspannt ist.

Bevorzugt ist das Getriebe selbsthemmend ausgebildet. Wird die Bestromung des Antriebs unterbrochen, beispielsweise dann, wenn konstante Betriebszustände herrschen und das Stellelement bezogen auf die Durchbrechung längere Zeit in konstanter Position verharrt, ist von Vorteil, dass ein zur Anwendung gelangendes Getriebe nicht auch durch die Selbsthemmung des Stellelements in seiner Position gehalten wird, sondern ebenfalls selbsthemmend ausgebildet ist.

Der Antrieb kann durch einen Elektromotor gebildet sein. Der Elektromotor kann vorzugsweise ein Schrittmotor mit externer oder interner Ansteuerung oder ein elektronisch komutierter Gleichstrommotor mit Hallsensoren zur Positionserkennung des Stellelements und entsprechender Elektronik sein. Außerdem können Gleichstrommotoren mit Bürsten, Tachogenerator und Elektronik zur Anwendung gelangen, die innerhalb oder außerhalb des Hydrolagers angeordnet sind. Vorteilhaft ist ein besonders drehmomentstarker Motor, damit die Anzahl der Getriebestufen minimiert werden kann. Das Motordrehmoment muß zum Anfahren in die entgegengesetzte Richtung in jedem Fall auch dann ausreichen, wenn sich das Stellelement in einer seiner beiden Endanschlagspositionen befindet.

Die Trennwand kann eine in einer Ausnehmung angeordnete und in Richtung der eingeleiteten Schwingungen hin- und herbewegbare Membran aufweisen. Diese Membran ist zur Isolierung kleinamplitudiger, höherfrequenter Schwingungen vorgesehen, wie sie bei laufendem Verbrennungsmotor infolge der Verbrennung und der hin- und hergehenden Massen des Kurbeltriebes auftreten. Generell kann die Membran innerhalb der Ausnehmung in ihrem außenumfangsseitigem Bereich gebunden oder insgesamt lose angeordnet sein.

Die Trennwand kann als Düsenkäfig mit einem ersten und einem zweiten Gitter ausgebildet sein, wobei die Gitter auf einander in Richtung der eingeleiteten Schwingungen gegenüberliegenden Seiten der Membran angeordnet sind und die Ausnehmung begrenzen. Durch die Gitter wird die Oberfläche der Membran von der Dämpfungsflüssigkeit aus Arbeits- und Ausgleichsraum unmittelbar berührt.

Zur Dämpfung tieffrequenter, großamplitudiger Schwingungen kann die Trennwand einen Dämpfungskanal aufweisen, der den Arbeits- und den Ausgleichsraum flüssigkeitsleitend verbindet.

Der Dämpfungskanal umschließt die Membran bevorzugt außenumfangsseitig. Die Dämpfungswirkung tieffrequenter großamplitudiger Schwingungen beruht auf der Hin- und Herverlagerung der Dämpfungsflüssigkeit innerhalb des Dämpfungskanals vom Arbeitsraum in Richtung des Ausgleichsraums und umgekehrt. Dadurch, dass der Dämpfungskanal die Membran außenumfangsseitig umschließt, weist der Dämpfungskanal insgesamt eine große Wirklänge auf. Je größer die Masse der hin- und herverlagerten Flüssigkeit innerhalb des Dämpfungskanals, desto tieferfrequente, großamplitudigere Schwingungen können gedämpft werden.

Die Membran kann durch ein Klemmelement bei Öffnung der Durchbrechung mittels des Stellelements flüssigkeitsdicht innerhalb der Ausnehmung arretierbar sein. Ist das Hydrolager, wie zuvor beschrieben, gestaltet, kann einerseits die Schwingungstilgung leerlaufbedingter Schwingungen und andererseits die Isolierung höherfrequenter Schwingungen in einem Drehzahlbereich oberhalb der Leerlaufdrehzahl verbessert werden. Durch die flüssigkeitsdichte Arretierung der Membran innerhalb der Ausnehmung bei offener Durchbrechung wird eine gute Tilgerwirkung von Schwingungen erzielt, die durch eine auf dem Lager abgestützte Verbrennungskraftmaschine während ihres Leerlaufs in das Lager eingeleitet werden. Ein Überströmen von Dämpfungsflüssigkeit aus dem Arbeitsraum in den Ausgleichsraum und wieder zurück findet im Wesentlichen nur durch die Durchbrechung statt, da der Strömungswiderstand hier wesentlich geringer ist als bei einer Durchströmung des Dämpfungskanals. Während des Betriebs der Verbrennungskraftmaschine oberhalb der Leerlaufdrehzahl wird die Durchbrechung durch den Dichtkörper verschlossen und die flüssigkeitsdichte Arretierung der Membran innerhalb der Trennwand aufgehoben. In diesem Betriebszustand funktioniert das Lager wie allgemein bekannte, hydraulisch dämpfende Lager, bei denen zur Isolierung höherfrequenter, kleinamplitudiger, motorerregter Schwingungen, die Membran lose hin- und herbeweglich innerhalb der Trennwand angeordnet ist. Zur Dämpfung tieffrequenter, großamplitudiger Schwingungen, wie sie beispielsweise beim Überfahren von Bordsteinkanten entstehen, schwingt die innerhalb der Durchtrittsöffnung befindliche Dämpfungsflüssigkeit phasenverschoben, bevorzugt gegenphasig, hin- und her; die tieffrequenten, großamplitudigen Schwingungen werden dadurch gedämpft.

Das Klemmelement ist in Richtung der eingeleiteten Schwingungen elastisch nachgiebig verformbar, um dadurch bedarfsweise ein Arretieren oder Lösen der Membran innerhalb der Ausnehmung zu ermöglichen.

Das Gitter ist üblicherweise aus Leichtmetall oder Kunststoff hergestellt (Aluminium oder Magnesium) und wird von einer Elastomerfeder gehalten.

Das Klemmelement kann alternativ auch einen einstückigen und materialeinheitlichen Bestandteil eines der Gitter bilden. Das Gitter wäre in diesem Fall beispielsweise aus einem Federstahl hergestellt, der sich während der gesamten Gebrauchsdauer des Hydrolagers derart elastisch verformt, dass die Membran innerhalb der Ausnehmung bedarfsweise lösbar oder arretierbar ist.

Das Klemmelement kann, bezogen auf die Gitter, separat erzeugt und innerhalb der Ausnehmung angeordnet sein. Dabei kann das Klemmelement mittels eines elastisch nachgiebigen Spannelements innerhalb der Ausnehmung angeordnet sein, wobei das Spannelement bevorzugt eine degressive Kraft-Weg-Charakteristik aufweist. Das Spannelement kann beispielsweise aus einem elastomeren Werkstoff bestehen, der einerseits mit einem ortsfest in der Ausnehmung der Trennwand angeordneten Stützring und andererseits mit dem in Richtung der eingeleiteten Schwingungen hin- und herbewegbaren Klemmelement, durch das die unterschiedlichen Freiheitsgrade der Membran bewirkt werden, verbunden ist. Das Spannelement, das beispielsweise kreisringförmig ausgebildet ist und aus elastomerem Werkstoff besteht, wird so dimensioniert, dass es aufgrund seiner Vorspannung in der Lage ist, die Membran so zu klemmen, dass der Leerlauftilger gut schwingen kann. Damit der Antrieb nicht überdimensioniert werden muß und/oder das Getriebe nur eine geringe Anzahl von Getriebestufen aufweisen muß, ist das Stellelement mit einer degressiven Kraft-Weg-Charakteristik versehen.

Das Klemmelement kann die Durchbrechung außenumfangsseitig begrenzen. Bevorzugt weist das Klemmelement einen als Tilgerkanal ausgebildeten Zylinderabschnitt auf, der die Durchbrechung außenumfangsseitig begrenzt, wobei die Länge des Zylinderabschnitts axial in Richtung der eingeleiteten Schwingungen an die zu tilgenden Schwingungen angepaßt ist.

Für eine gute Wirksamkeit in einem großen Frequenzbereich ist es von großem Vorteil, wenn das Stellelement und das Klemmelement funktionstechnisch gekoppelt und gemeinsam durch den Antrieb betätigbar sind. Weist das Hydrolager zusätzlich zu der durch das Stellelement bedarfsweise verschließbar oder in Offenstellung bringbaren Durchbrechung eine Trennwand mit einer hin- und herbeweglichen Membran und einem Dämpfungskanal auf, können alle Arten auftretender Schwingungen getilgt, gedämpft oder isoliert werden. Betätigt wird das Lager in Abhängigkeit von einem Kennfeld, das beispielsweise durch die Motorsteuerung einer Verbrennungskraftmaschine gebildet ist. Durch den Antrieb und das gegebenenfalls zur Anwendung gelangende Getriebe in Verbindung mit der funktionstechnischen Verbindung des Stellelements und des Klemmelements und deren gemeinsamer Betätigung durch den Antrieb, ist das erfindungsgemäße Hydrolager außerordentlich vielseitig einsetzbar und einfach ansteuerbar.

Das erfindungsgemäße Hydrolager wird nachfolgend anhand der Figuren 1 bis 7 näher erläutert. Diese zeigen jeweils in schematischer Darstellung:

Die Figuren 1 bis 3 jeweils einen Ausschnitt aus einem Ausführungsbeispiel des beanspruchten Hydrolagers, wobei
- in Figur 1: die Schaltstellung "Leerlauf",
- in Figur 2: die Schaltstellung "Fahrbetrieb, Membran mit Spiel" und
- in Figur 3: die Schaltstellung "Fahrbetrieb mit gehaltener Membran" dargestellt ist.
- In Figur 4: ist das erste Ausführungsbeispiel eines erfindungsgemäßen Hydrolagers gemäß den Figuren 1 bis 3 als vollständiges Hydrolager gezeigt,
- in Figur 5: ein zweites Ausführungsbeispiel, das sich vom Ausführungsbeispiel gemäß Figur 4 durch ein abweichend gestaltetes Stellelement unterscheidet,
- in Figur 6: ist ein drittes Ausführungsbeispiel gezeigt, das sich vom ersten Ausführungsbeispiel gemäß Figur 4 durch ein abweichend gestaltetes Klemmelement für die Membran unterscheidet und
- in Figur 7: ist ein viertes Ausführungsbeispiel gezeigt, das zur Unterstützung des Antriebs eine Spiralfeder aufweist, die zwischen dem Gehäuse des Antriebs und der Spindelmutter unter elastischer Vorspannung angeordnet ist.

### Figurenbeschreibung

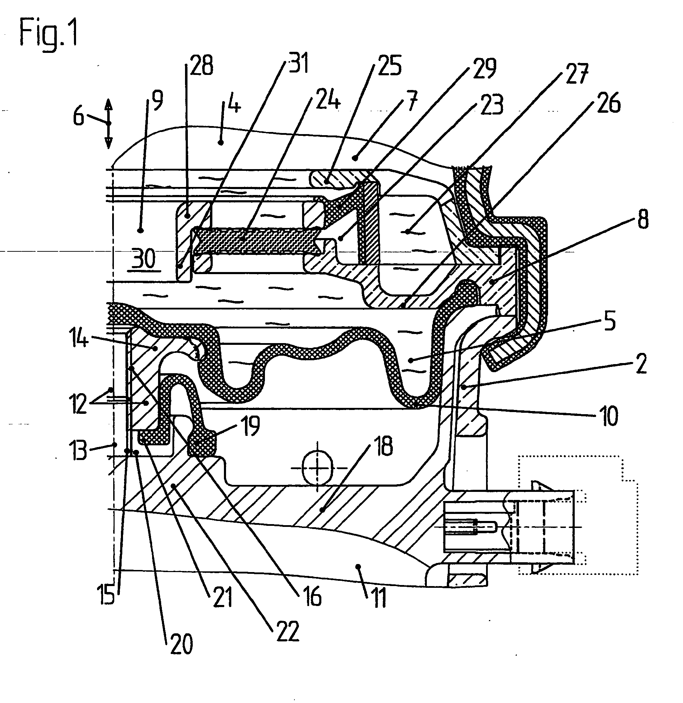

In den Figuren 1 bis 3 ist jeweils derselbe Ausschnitt aus demselben Ausführungsbeispiel dargestellt, wobei voneinander abweichende Schaltstellungen gezeigt sind.

In allen Figuren ist das Auflager 2 gezeigt, sowie der Arbeits- 4 und Ausgleichsraum 5, die mit Dämpfungsflüssigkeit 7 gefüllt sind. Der Arbeits- 4 und der Ausgleichsraum 5 sind in Richtung der eingeleiteten Schwingungen 6 benachbart zueinander angeordnet und durch die Trennwand 8, die die Durchbrechung 9 aufweist, voneinander getrennt. Die Durchbrechung 9 verbindet den Arbeitsraum 4 und den Ausgleichsraum 5 strömungsleitend miteinander, wobei der Ausgleichsraum 5 auf der der Trennwand 8 abgewandten Seite durch den im Wesentlichen drucklos Volumen aufnehmenden Rollbalg 10 aus elastomeren Werkstoff begrenzt ist. Der Durchtrittsquerschnitt der Durchbrechung 9 ist durch ein von einem Antrieb 11 kontinuierlich stufenlos verstellbares Stellelement 12 kontinuierlich stufenlos verstellbar. Das Stellelement 12 weist eine Selbsthemmung auf.

Neben dem Stellelement 12, das in allen Ausführungsbeispielen eine Selbsthemmung aufweist, ist das Stellelement 12 in allen Ausführungsbeispielen durch eine Spindel 13 und eine auf der Spindel 13 beweglich angeordnete Spindelmutter 14 gebildet, wobei das Bewegungsgewinde 15, 16 von Spindel 13 und Spindelmutter 14 selbsthemmend ausgebildet ist.

Der Antrieb 11 der hier gezeigten Ausführungsbeispiele ist jeweils durch einen Elektromotor gebildet, durch den das Stellelement 12 betätigbar ist. In Abhängigkeit von den jeweiligen Gegebenheiten des Anwendungsfalles kann zwischen dem Antrieb 11 und dem Stellelement 12 ein Getriebe 22 angeordnet sein, wobei das Getriebe 22 bevorzugt ebenfalls selbsthemmend ausgebildet ist.

Um möglichst variable Gebrauchseigenschaften des erfindungsgemäßen Hydrolagers zu erzielen, ist in allen hier gezeigten Ausführungsbeispielen eine Trennwand 8 mit einer Ausnehmung 23 vorgesehen, in der eine in Richtung der eingeleiteten Schwingungen 6 hin- und her bewegbare Membran 24 angeordnet ist. Außerdem ist in der Trennwand 8 ein Dämpfungskanal 27 angeordnet, der den Arbeitsraum 4 und den Ausgleichsraum 5 flüssigkeitsleitend miteinander verbindet.

Die guten Gebrauchseigenschaften in allen Betriebszuständen des Hydrolagers werden maßgeblich dadurch erreicht, dass die Membran 24 durch das Klemmelement 28 bei Öffnung der Durchbrechung 9 mittels des Stellelements 12 flüssigkeitsdicht innerhalb der Ausnehmung 23 arretierbar ist und dass die Membran 24 durch eine stufenlos einstellbare Klemmkraft beaufschlagbar ist. Gekoppelt mit dem kontinuierlich stufenlos verstellbaren Durchtrittsquerschnitt durch die Durchbrechung 9 können alle auftretenden Schwingungen effizient isoliert, gedämpft oder getilgt werden.

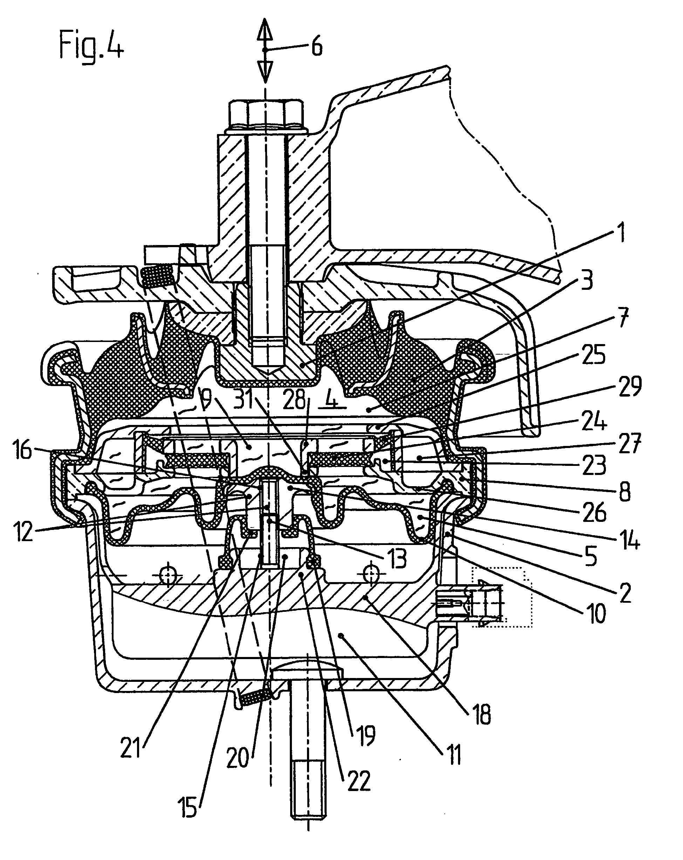

In den Figuren 1 bis 3 sind unterschiedliche Schaltstellungen des erfindungsgemäßen Hydrolagers aus Figur 4 gezeigt. In Figur 1 ist die Schaltstellung "Leerlauf" dargestellt. Die Durchbrechung 9 ist außenumfangsseitig durch das Klemmelement 29 begrenzt, wobei das Klemmelement 29 einen als Tilgerkanal 30 ausgebildeten Zylinderabschnitt 31 aufweist. Das Klemmelement 28 besteht in jedem der Ausführungsbeispiele aus einem zäh-harten Werkstoff, wobei das Klemmelement 28 in den Figuren 1 bis 3, bezogen auf die Gitter 25, 26, die einen Bestandteil der Trennwand 8 bilden, separat erzeugt und innerhalb der Ausnehmung 23 angeordnet ist. Das Klemmelement 28 ist mittels eines elastisch nachgiebigen Spannelements 29 aus elastomerem Werkstoff innerhalb der Ausnehmung 23 angeordnet, wobei das Spannelement 29 eine degressive Kraft-Weg-Charakteristik aufweist. Bei offener Durchbrechung 9 drückt das vorgespannte Spannelement 29 das Klemmelement 28 auf das untere Gitter 26 der Trennwand 8 und klemmt die Membran 24 dadurch flüssigkeitsdicht in der Ausnehmung 23 fest.

Das Hydrolager wirkt dadurch als Leerlauftilger, wobei die innerhalb der Durchbrechung angeordnete Flüssigkeitssäule gegenphasig zu den eingeleiteten Leerlaufschwingungen schwingt; eine Flüssigkeitsverlagerung der Dämpfungsflüssigkeit 7 vom Arbeitsraum 4 in den Ausgleichsraum 5 und wieder zurück durch den Dämpfungskanal 27 erfolgt nicht.

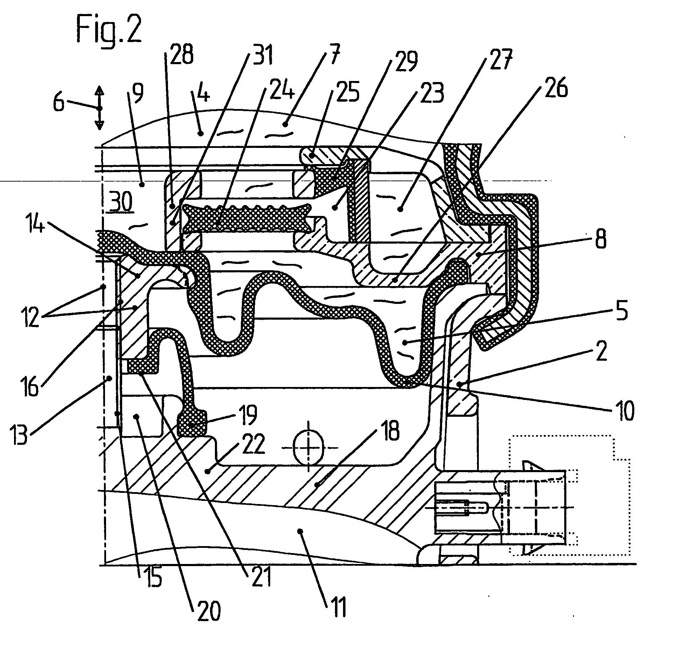

In Figur 2 ist das Hydrolager in der Schaltstellung "Fahrbetrieb, Membran mit Spiel" gezeigt. In der hier gezeigten Schaltstellung ist die Durchbrechung 9 geschlossen. Das wird dadurch erreicht, dass das Stellelement 12, bestehend aus Spindel 13 und Spindelmutter 14 durch den als Elektromotor ausgebildeten Antrieb 11 gegen das Klemmelement 28 gedrückt wird, das, entgegen der Federkraft des Spannelements 29, gegen das obere Gitter 25 gedrückt wird. Dadurch hat die Membran 24 innerhalb der Ausnehmung 23 Spiel, für eine ideale Entkopplung höherfrequenter, kleinamplitudiger Schwingungen. Werden demgegenüber großamplitudige, tieffrequente Schwingungen in das Hydrolager eingeleitet, erfolgt eine Flüssigkeitsverlagerung der Dämpfungsflüssigkeit 7 zwischen dem Arbeitsraum 4 und dem Ausgleichsraum 5 durch den Dämpfungskanal 27 phasenverschoben, bevorzugt gegenphasig, so dass Stuckern gedämpft wird. Die hier gezeigte Schaltstellung ist besonders für Beschleunigung eines Fahrzeugs geeignet.

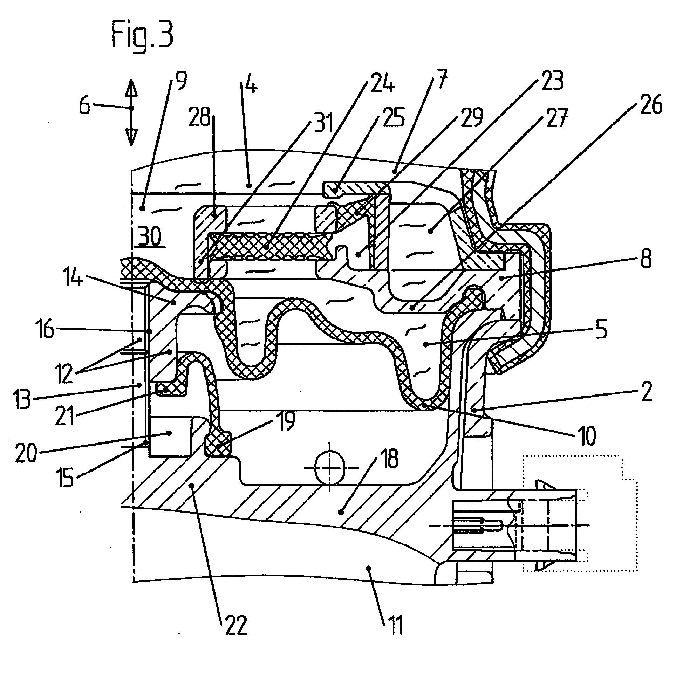

In Figur 3 ist die Schaltstellung "Fahrbetrieb mit gehaltener Membran" gezeigt. Diese Schaltstellung ist, im Gegensatz zu den in den Figuren 1 und 2 gezeigten Schaltstellungen, für Konstantfahrt eines Kraftfahrzeugs bei Teillast geeignet.

Die Durchbrechung 9 ist durch das Stellelement 12 ebenfalls, wie in Figur 2, geschlossen, wobei das Stellelement 12 durch den Antrieb 11 nur soweit axial in Richtung des Arbeitsraums 4 bewegt wird, bis es zur dichten Anlage am Klemmelement 28 kommt. Im Gegensatz zur Schaltstellung aus Figur 1, ist die Klemmkraft von Klemmelement 28 und Spannelement 29 auf die Membran 24 reduziert, wobei die Membran 24 jedoch noch flüssigkeitsdicht in ihrer Position locker gehalten wird. Die locker gehaltene Membran 24 erzeugt nur eine geringe dynamische Verhärtung mit noch guter Akustik. Stuckern und Mikrostuckern werden je nach Abstimmung des langen Kanals 27 im typischen Frequenzbereich ziwschen7 und 18 Hz gedämpft.

In Figur 4 ist das gesamte Hydrolager aus den Figuren 1 bis 3 gezeigt. Das Traglager 1 und das Auflager 2 sind durch den Federkörper 3 elastisch nachgiebig aufeinander abgestützt. Der Antrieb 11 ist mit seinem Gehäuse 18 ein zumindest teilweise integrierter Bestandteil des Hydrolagers, wobei die Dichtung 19 in axialer Richtung einerseits mit dem Gehäuse 18 des Antriebs 11 verbunden ist und in axialer Richtung andererseits dichtend an der, bezogen auf die Spindel 13, in axialer Richtung bewegliche Spindelmutter 14. Auch die Dichtung 19 ist rollbalgförmig ausgebildet. Dadurch wird eine hohe Anzahl von Lastwechseln während einer langen Gebrauchsdauer ohne Beschädigung/Zerstörung sichergestellt. Die Dichtung 19 dichtet den Raum 20, in dem die Spindel 13 angeordnet ist, gegenüber der Umgebung hermetisch ab. In Figur 4 ist die Schaltstellung "Fahrbetrieb mit gehaltener Membran" entsprechend Figur 3 gezeigt.

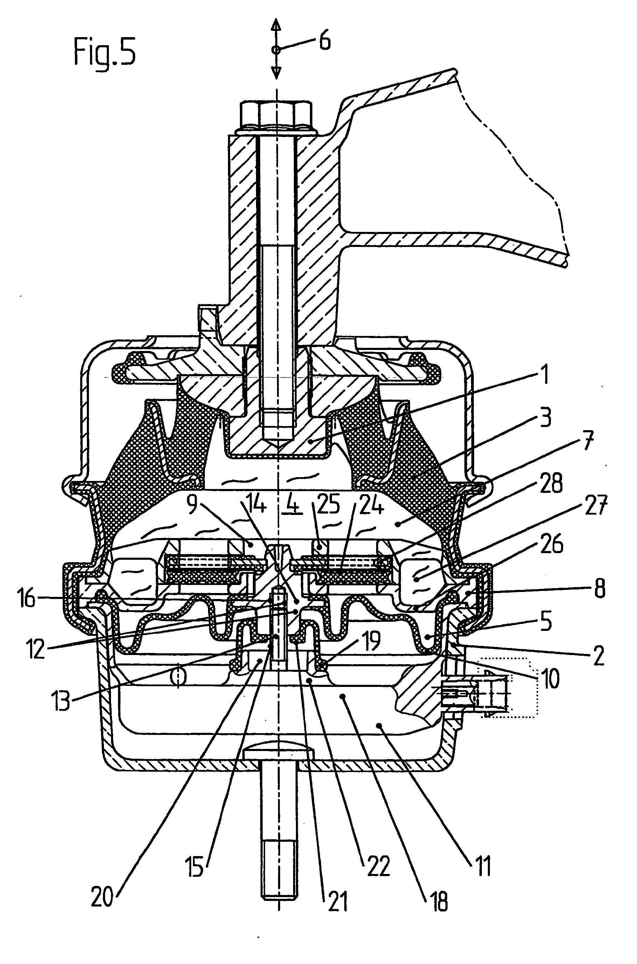

In Figur 5 ist ein zweites Ausführungsbeispiel des Hydrolagers gezeigt, das sich vom Ausführungsbeispiel aus den Figuren 1 bis 4 durch ein abweichend gestaltetes Stellelement 12 unterscheidet. Die unterschiedlichen Schaltstellungen weichen gegenüber den zuvor beschriebenen nicht ab.

Das Stellelement 12 umfaßt auch in diesem Ausführungsbeispiel eine Spindel 13 und eine Spindelmutter14, wobei die Spindelmutter 14 vom Ausführungsbeispiel gemäß Figuren 1 bis 4 abweichend gestaltet ist. Das Klemmelement 28 ist in diesem Ausführungsbeispiel durch eine kreisringförmige Scheibe gebildet, die mittels ihrer zentralen Durchbrechung in eine Hinterschneidung der Spindelmutter 14 eingeschnappt ist. Bei Hin- und Herbewegung der Spindelmutter 14 in Richtung der eingeleiteten Schwingungen 6 wird die Membran 24 mittels des Klemmelements 28 innerhalb der Ausnehmung 23 mehr oder weniger stark geklemmt.

Die Schaltstellung für den Leerlaufbetrieb ist ein Bewegen der Spindelmutter 14 in Richtung des Federkörpers, so daß die Membrane 24 ein überproportional großes Spiel von ca. 1 mm oder mehr aufweist. Da der Werkstoff der Membrane 24 etwa die gleiche Dichte wie die Flüssigkeit im Arbeitsraum 4 aufweist, wird sich die Flüssigkeit innerhalb der Öffnungen des oberen 25 und unteren Gitters 26 wie auch denen des Klemmelements 28 frei bewegen können.

Diese freie Flüssigkeitsbewegung kann keine Dämpfung und damit auch keine Verhärtung des Lagers erzeugen, so daß nur die Elastomerfeder des Federkörpers 3 wirksam ist.

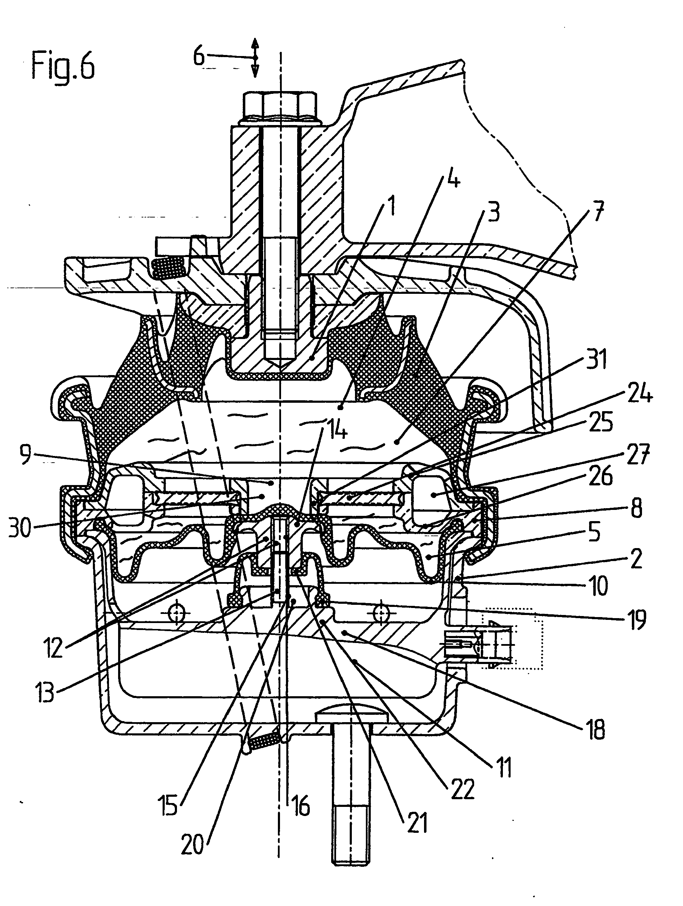

In Figur 6 ist ein drittes Ausführungsbeispiel gezeigt, dass sich von den zuvor beschriebenen Ausführungsbeispielen durch eine abweichend gestaltete Trennwand 8 unterscheidet. Die Trennwand 8 umfaßt auch in diesem Ausführungsbeispiel ein oberes 25 und ein unteres Gitter 26, die die Ausnehmung 23 begrenzen. Das obere Gitter 25 besteht in diesem Ausführungsbeispiel jedoch aus einem Federstahl, wobei das Klemmelement 28, wie in den Figuren 1 bis 4, den Tilgerkanal 30 durch den Zylinderabschnitt 31 begrenzt. Das Klemmelement 28 bildet einen einstückigen Bestandteil des oberen Gitters 25, wobei durch die Werkstoffauswahl des oberen Gitters 25 das Spannelement 29 ebenfalls integriert ist. Die bedarfsweise Klemmung der Membran 24 erfolgt durch unterschiedlich starke elastische Verformung des Klemmelements 28. Eine solche Ausgestaltung weist einen teilearmen Aufbau auf und ist in fertigungstechnischer und wirtschaftlicher Hinsicht daher von hervorzuhebendem Vorteil.

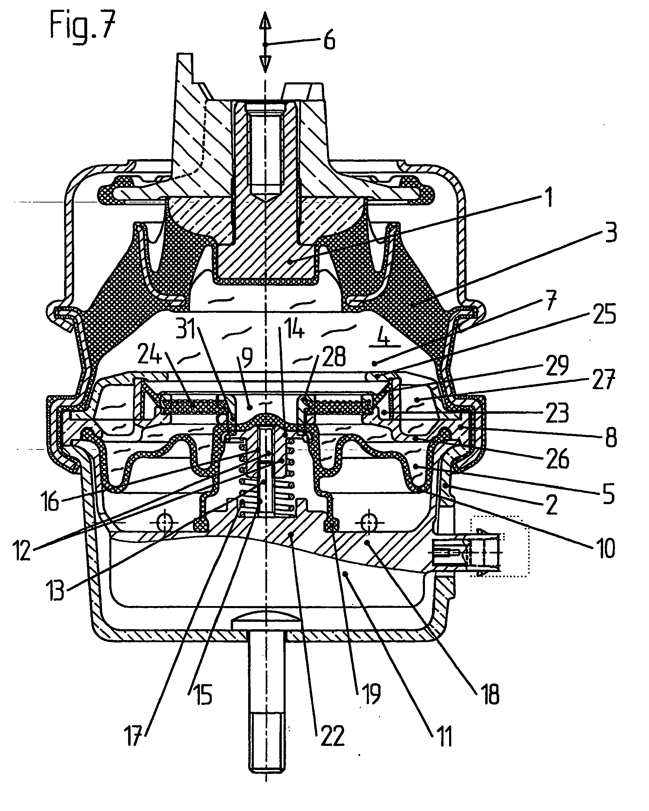

In Figur 7 ist ein weiteres Ausführungsbeispiel gezeigt, dass sich vom Ausführungsbeispiel aus den Figuren 1 bis 6 hauptsächlich dadurch unterscheidet, dass die Dichtung 19 einstückig ineinander übergehend und materialeinheitlich mit dem Rollbalg 10 ausgebildet ist. Außerdem ist die Spindel 13 von einer als Schraubendruckfeder ausgebildeten Spiralfeder 17 umschlossen, die in axialer Richtung einerseits an der Spindelmutter 14 und in axialer Richtung andererseits am Gehäuse des Antriebs 11 unter elastischer Vorspannung angeordnet ist. Die Spiralfeder 17 ist zur Unterstützung des Antriebs 11 vorgesehen. Bei Bewegung des Stellelements 12 axial in Richtung der eingeleiteten Schwingungen 6 ist durch die Verwendung der Spiralfeder 17 nur eine vergleichsweise geringe Antriebsleistung des Antriebs 11 erforderlich, um die Durchbrechung 9 zu schließen. Die Verwendung eines kleinen und kostengünstigen Antriebs 11 ist dadurch möglich. Jedes der hier gezeigten Ausführungsbeispiele kann zwischen dem Antrieb 11 und dem Stellelement 12 ein Getriebe 22 aufweisen, wobei das Getriebe 22 bevorzugt ebenfalls selbsthemmend ausgebildet ist.

Entscheidend ist die Selbsthemmung des Stellelements 12. Dadurch ist eine unerwünschte, selbsttätige Verstellung des Stellelements 12 ausgeschlossen. Die Selbsthemmung ist insbesondere deshalb von Vorteil, weil der Antrieb 11 nur zur kontinuierlich stufenlosen Verstellung des Stellelements 12 eingeschaltet werden muß. Ist die gewünschte Position des Stellelements 12, bezogen auf die Durchbrechung 9, erreicht, kann der Antrieb 11 abgeschaltet werden, ohne dass sich die Position des Stellelements 12 während der anschließenden Gebrauchsdauer unerwünscht verändert, was zu einer unerwünschten Veränderung der Gebrauchseigenschaften führen würde.

## Patentansprüche

1. Hydrolager, umfassend ein Traglager (1) und ein Auflager (2), die durch einen im Wesentlichen hohlkegelförmig gestalteten Federkörper (3) aus elastomerem Werkstoff miteinander verbunden sind und einen Arbeits- (4) und einen Ausgleichsraum (5) begrenzen, wobei der Arbeits- (4) und der Ausgleichsraum (5) einander in Richtung der eingeleiteten Schwingungen (6) benachbart zugeordnet sind und mit Dämpfungsflüssigkeit (7) gefüllt und auf den einander zugewandten Seiten durch eine Trennwand (8) mit zumindest einer Durchbrechung (9) voneinander getrennt sind, wobei die Durchbrechung (9) den Arbeitsraum (4) und den Ausgleichsraum (5) strömungsleitend verbindet, wobei der Ausgleichsraum (5) auf der der Trennwand (8) abgewandten Seite durch einen im Wesentlichen drucklos Volumen aufnehmenden Rollbalg (10) aus elastisch nachgiebigem Werkstoff begrenzt ist, wobei der Durchtrittsquerschnitt der Durchbrechung (9) durch ein von einem Antrieb (11) kontinuierlich stufenlos verstellbares Stellelement (12) kontinuierlich stufenlos verstellbar ist, wobei das Stellelement (12) eine Selbsthemmung aufweist, wobei das Stellelement (12) eine Spindel (13) und eine auf der Spindel (13) beweglich angeordnete Spindelmutter (14) umfaßt und wobei die Spindel (13) und die Spindelmutter (14) durch ein Bewegungsgewinde (15, 16) mit Selbsthemmung miteinander verbunden sind, **dadurch gekennzeichnet, dass** die Spindel (13) in einem durch eine Dichtung (19) hermetisch abgedichteten Raum (20) angeordnet ist.

2. Hydrolager nach Anspruch 1, **dadurch gekennzeichnet, dass** die Dichtung (19) rollbalgförmig ausgebildet ist und den Raum (20) dichtend überdeckt und mit ihrer offenen Stirnseite (21) dichtend mit dem Gehäuse (18) verbunden ist.

3. Hydrolager nach einem der Ansprüche 1 oder 2, **dadurch gekennzeichnet, dass** die Dichtung (19) einstückig ineinander übergehend und materialeinheitlich mit dem Rollbalg (10) ausgebildet ist.

4. Hydrolager nach einem der Ansprüche 1 bis 3, **dadurch gekennzeichnet, dass** die Spindelmutter (14) flüssigkeitsdicht mit dem Rollbalg (10) verbunden ist.

5. Hydrolager nach einem der Ansprüche 1 bis 4, **dadurch gekennzeichnet, dass** die Spindelmutter (14) und der Rollbalg (10) vulkanisiert sind.

6. Hydrolager nach einem der Ansprüche 1 bis 4, **dadurch gekennzeichnet, dass** die Spindelmutter (14) und der Rollbalg (10) kraft- und/oder formschlüssig verbunden sind.

7. Hydrolager nach einem der Ansprüche 1 bis 6, **dadurch gekennzeichnet, dass** die Spindel (13) von einer als Schraubendruckfeder ausgebildeten Spiralfeder (17) umschlossen ist, die in axialer Richtung einerseits an der Spindelmutter (14) und in axialer Richtung andererseits am Gehäuse (18) des Antriebs (11) unter elastischer Vorspannung angeordnet ist.

8. Hydrolager nach Anspruch 7, **dadurch gekennzeichnet, dass** auch die Spiralfeder (17) innerhalb des Raums (20) angeordnet ist.

9. Hydrolager nach einem der Ansprüche 1 bis 8, **dadurch gekennzeichnet, dass** zwischen dem Antrieb (11) und dem Stellelement (12) ein Getriebe (22) angeordnet ist.

10. Hydrolager nach Anspruch 9, **dadurch gekennzeichnet, dass** das Getriebe (22) selbsthemmend ausgebildet ist.

11. Hydrolager nach einem der Ansprüche 1 bis 10, **dadurch gekennzeichnet, dass** der Antrieb (11) durch einen Elektromotor gebildet ist.

12. Hydrolager nach einem der Ansprüche 1 bis 11, **dadurch gekennzeichnet, dass** die Trennwand (8) eine in einer Ausnehmung (23) angeordnete und in Richtung der eingeleiteten Schwingungen (6) hin- und herbewegbare Membran (24) aufweist.

13. Hydrolager nach einem der Ansprüche 1 bis 12, **dadurch gekennzeichnet, dass** die Trennwand (8) als Düsenkäfig mit einem ersten (25) und einem zweiten Gitter (26) ausgebildet ist, wobei die Gitter (25, 26) auf einander in Richtung der eingeleiteten Schwingungen (6) gegenüberliegenden Seiten der Membran (24) angeordnet sind und die Ausnehmung (23) begrenzen.

14. Hydrolager nach einem der Ansprüche 1 bis 13, **dadurch gekennzeichnet, dass** die Trennwand (8) einem Dämpfungskanal (27) aufweist, der den Arbeits- (4) und den ausgleichsraum (5) flüssigkeitsleitend verbindet.

15. Hydrolager nach Anspruch 14, **dadurch gekennzeichnet, dass** der Dämpfungskanal (27) die Membran (24) außenumfangsseitig umschließt.

16. Hydrolager nach einem der Ansprüche 12 bis 15, **dadurch gekennzeichnet, dass** die Membran (24) durch ein Klemmelement (28) bei Öffnung der Durchbrechung (9) mittels des Stellelements (12) flüssigkeitsdicht innerhalb der Ausnehmung (23) arretierbar ist.

17. Hydrolager nach Anspruch 16, **dadurch gekennzeichnet, dass** das Klemmelement (28) in Richtung der eingeleiteten Schwingungen (6) elastisch nachgiebig verformbar ist.

18. Hydrolager nach einem der Ansprüche 16 oder 17, **dadurch gekennzeichnet, dass** das Klemmelement (28) einen einstückigen und materialeinheitlichen Bestandteil eines der Gitter (25, 26) bildet.

19. Hydrolager nach einem der Ansprüche 16 oder 17, **dadurch gekennzeichnet, dass** das Klemmelement (28), bezogen auf die Gitter (25, 26) separat erzeugt und innerhalb der Ausnehmung (23) angeordnet ist.

20. Hydrolager nach Anspruch 19, **dadurch gekennzeichnet, dass** das Klemmelement (28) mittels eines elastisch nachgiebigen Spannelements (29) innerhalb der Ausnehmung (23) angeordnet ist.

21. Hydrolager nach Anspruch 20, **dadurch gekennzeichnet, dass** das Spannelement (29) eine degressive Kraft-Weg-Charakteristik aufweist.

22. Hydrolager nach einem der Ansprüche 16 bis 21, **dadurch gekennzeichnet, dass** das Spannelement (29) die Durchbrechung (9) außenumfangsseitig begrenzt.

23. Hydrolager nach einem der Ansprüche 16 bis 22, **dadurch gekennzeichnet, dass** das Klemmelement (29) einen als Tilgerkanal (30) ausgebildeten Zylinderabschnitt (31) aufweist, der die Durchbrechung (9) außenumfangsseitig begrenzt.

24. Hydrolager nach einem der Ansprüche 1 bis 23, **dadurch gekennzeichnet, dass** das Stellelement (12) und das Klemmelement (28) funktionstechnisch gekoppelt und gemeinsam durch den Antrieb (11) betätigbar sind.

## Claims

1. Hydraulic mount, comprising a supporting mount (1) and a support (2) which are connected to one another by a spring body (3) of essentially hollow conical design and made of an elastomeric material and define a working space (4) and a compensating space (5), the working space (4) and the compensating space (5) being assigned to one another in an adjacent position in the direction of the initiated vibrations (6) and being filled with damping fluid (7) and being separated from one another on the sides facing one another by means of a dividing wall (8) having at least one aperture (9), the aperture (9) connecting the working space (4) and the compensating space (5) in a fluidically conductive manner, the compensating space (5), on the side remote from the dividing wall (8), being defined by a rolling bellows (10) accommodating an essentially pressureless volume and made of an elastically resilient material, the cross-sectional area of the aperture (9) being adjustable in a continuously infinitely variable manner by an actuating element (12) which can be adjusted in a continuously infinitely variable manner by a drive (11), the actuating element (12) having self-locking, the actuating element (12) comprising a spindle (13) and a spindle nut (14) movably arranged on the spindle (13), and the spindle (13) and the spindle nut (14) being connected to one another by a motion-transmitting screw thread (15, 16) having self-locking, **characterized in that** the spindle (13) is arranged in a space (20) hermetically sealed off by a seal (19).

2. Hydraulic mount according to Claim 1, **characterized in that** the seal (19) is of rolling-bellows-shaped design and covers the space (20) in a sealing manner and is connected with its open end face (21) to the housing (18) in a sealing manner.

3. Hydraulic mount according to either of Claims 1 and 2, **characterized in that** the seal (19) is designed so as to merge in one piece with and be made of the same material as the rolling bellows (10).

4. Hydraulic mount according to one of Claims 1 to 3, **characterized in that** the spindle nut (14) is connected to the rolling bellows (10) in a fluid-tight manner.

5. Hydraulic mount according to one of Claims 1 to 4, **characterized in that** the spindle nut (14) and the rolling bellows (10) are vulcanized.

6. Hydraulic mount according to one of Claims 1 to 4, **characterized in that** the spindle nut (14) and the rolling bellows (10) are connected in a frictional and/or positive-locking manner.

7. Hydraulic mount according to one of Claims 1 to 6, **characterized in that** the spindle (13) is enclosed by a coil spring (17) which is designed as a helical compression spring and is arranged under elastic preloading in the axial direction on the one side on the spindle nut (14) and in the axial direction on the other side on the housing (18) of the drive (11).

8. Hydraulic mount according to Claim 7, **characterized in that** the coil spring (17) is also arranged inside the space (20).

9. Hydraulic mount according to one of Claims 1 to 8, **characterized in that** a gear unit (22) is arranged between the drive (11) and the actuating element (12).

10. Hydraulic mount according to Claim 9, **characterized in that** the gear unit (22) is designed to be self-locking.

11. Hydraulic mount according to one of Claims 1 to 10, **characterized in that** the drive (11) is formed by an electric motor.

12. Hydraulic mount according to one of Claims 1 to 11, **characterized in that** the dividing wall (8) has a diaphragm (24) arranged in a recess (23) and movable in a reciprocating manner in the direction of the initiated vibrations (6).

13. Hydraulic mount according to one of Claims 1 to 12, **characterized in that** the dividing wall (8) is designed as a nozzle cage having a first screen (25) and a second screen (26), the screens (25, 26) being arranged on sides of the diaphragm (24) which are opposite one another in the direction of the initiated vibrations (6) and defining the recess (23).

14. Hydraulic mount according to one of Claims 1 to 13, **characterized in that** the dividing wall (8) has a damping passage (27) which connects the working space (4) and the compensating space (5) in a fluidically conductive manner.

15. Hydraulic mount according to Claim 14, **characterized in that** the damping passage (27) encloses the diaphragm (24) at the outer circumference.

16. Hydraulic mount according to one of Claims 12 to 15, **characterized in that** the diaphragm (24) can be locked in a fluid-tight manner inside the recess (23) by a clamping element (28) when the aperture (9) is opened by means of the actuating element (12).

17. Hydraulic mount according to Claim 16, **characterized in that** the clamping element (28) is deformable in an elastically resilient manner in the direction of the initiated vibrations (6).

18. Hydraulic mount according to either of Claims 16 and 17, **characterized in that** the clamping element (28) forms a component of one of the screens (25, 26), this component being in one piece with and being made of the same material as said screen.

19. Hydraulic mount according to either of Claims 16 and 17, **characterized in that** the clamping element (28), with respect to the screens (25, 26), is produced separately and arranged inside the recess (23).

20. Hydraulic mount according to Claim 19, **characterized in that** the clamping element (28) is arranged inside the recess (23) by means of an elastically resilient gripping element (29).

21. Hydraulic mount according to Claim 20, **characterized in that** the gripping element (29) has a degressive force force/displacement characteristic.

22. Hydraulic mount according to one of Claims 16 to 21, **characterized in that** the gripping element (29) defines the aperture (9) at the outer circumference.

23. Hydraulic mount according to one of Claims 16 to 22, **characterized in that** the clamping element (28) has a cylinder section (31) which is designed as an absorbing passage (30) and defines the aperture (9) at the outer circumference.

24. Hydraulic mount according to one of Claims 1 to 23, **characterized in that** the actuating element (12) and the clamping element (28) are functionally coupled and can be jointly actuated by the drive (11).

## Revendications

1. Palier hydraulique comprenant un palier d'appui (1) et un coussinet (2) qui sont reliés ensemble par un corps flexible (3) en matériau élastomère essentiellement en forme de cône creux et délimitent un espace de travail (4) et un espace de compensation (5), l'espace de travail (4) et l'espace de compensation (5) étant disposés l'un à côté de l'autre en direction des oscillations induites (6) et étant remplis d'un fluide d'amortissement (7) et étant séparés l'un de l'autre sur les côtés qui se font face par une paroi de séparation (8) comportant au moins une percée (9), la percée (9) reliant l'espace de travail (4) et l'espace de compensation (5) de manière à permettre la circulation, l'espace de compensation (5) étant délimité sur le côté opposé à la paroi de séparation (8) par un soufflet (10) en matériau déformable par effet élastique accueillant un volume essentiellement non pressurisé, la section transversale de passage de la percée (9) étant réglable progressivement et continuellement par un élément de réglage (12) réglable progressivement et continuellement par un mécanisme d'entraînement (11), l'élément de réglage (12) présentant un dispositif autobloquant, l'élément de réglage (12) comprenant une broche (13) et un écrou de broche (14) disposé de manière mobile sur la broche (13) et la broche (13) et l'écrou de broche (14) étant reliés ensemble avec autoblocage par un filet de déplacement (15, 16), **caractérisé en ce que** la broche (13) est disposée dans un espace (20) rendu hermétiquement étanche par une garniture d'étanchéité (19).

2. Palier hydraulique selon la revendication 1, **caractérisé en ce que** la garniture d'étanchéité (19) est réalisée en forme de soufflet et recouvre l'espace (20) en réalisant l'étanchéité et elle est reliée par son côté frontal ouvert (21) avec le boîtier (18) en réalisant l'étanchéité.

3. Palier hydraulique selon l'une des revendications 1 ou 2, **caractérisé en ce que** la garniture d'étanchéité (19) est réalisée d'une seule pièce avec le soufflet (10) en étant mélangés l'un dans l'autre et de manière homogène du point de vue du matériau.

4. Palier hydraulique selon l'une des revendications 1 à 3, **caractérisé en ce que** l'écrou de broche (14) est relié avec le soufflet (10) de manière étanche.

5. Palier hydraulique selon l'une des revendications 1 à 4, **caractérisé en ce que** l'écrou de broche (14) et le soufflet (10) sont vulcanisés.

6. Palier hydraulique selon l'une des revendications 1 à 4, **caractérisé en ce que** l'écrou de broche (14) et le soufflet (10) sont reliés par adhérence et/ou engagement géométrique.

7. Palier hydraulique selon l'une des revendications 1 à 6, **caractérisé en ce que** la broche (13) est entourée par un ressort hélicoïdal (17) réalisé sous la forme d'un ressort de compression à boudin qui est disposé sous précontrainte élastique d'un côté dans le sens axial contre l'écrou de broche (14) et de l'autre côté dans le sens axial contre le boîtier (18) du mécanisme d'entraînement (11).

8. Palier hydraulique selon la revendication 7, **caractérisé en ce que** le ressort hélicoïdal (17) est lui aussi disposé à l'intérieur de l'espace (20).

9. Palier hydraulique selon l'une des revendications 1 à 8, **caractérisé en ce qu'**un engrenage (22) est disposé entre le mécanisme d'entraînement (11) et l'élément de réglage (12).

10. Palier hydraulique selon la revendication 9, **caractérisé en ce que** l'engrenage (22) est autobloquant.

11. Palier hydraulique selon l'une des revendications 1 à 10, **caractérisé en ce que** le mécanisme d'entraînement (11) est formé par un moteur électrique.

12. Palier hydraulique selon l'une des revendications 1 à 11, **caractérisé en ce que** la paroi de séparation (8) présente une membrane (24) disposée dans un creux (23) et pouvant se déplacer dans un sens et dans l'autre en direction des oscillations induites (6).

13. Palier hydraulique selon l'une des revendications 1 à 12, **caractérisé en ce que** la paroi de séparation (8) est réalisée sous la forme d'une cage à buses avec une première (25) et une deuxième grille (26), les grilles (25, 26) étant disposées sur les côtés de la membrane (24) opposés l'un à l'autre en direction des oscillations induites (6) et délimitant le creux (23).

14. Palier hydraulique selon l'une des revendications 1 à 13, **caractérisé en ce que** la paroi de séparation (8) présente un canal d'atténuation (27) qui relie l'espace de travail (4) et l'espace de compensation (5) de manière à permettre le passage d'un liquide.

15. Palier hydraulique selon la revendication 14, **caractérisé en ce que** le canal d'atténuation (27) entoure la membrane (24) du côté du pourtour extérieur.

16. Palier hydraulique selon l'une des revendications 12 à 15, **caractérisé en ce que** la membrane (24) peut être bloquée de manière étanche à l'intérieur du creux (23) par un élément de blocage (28) lors de l'ouverture de la percée (9) au moyen de l'élément de réglage (12).

17. Palier hydraulique selon la revendication 16, **caractérisé en ce que** l'élément de blocage (28) est déformable par effet élastique en direction des oscillations induites (6).

18. Palier hydraulique selon l'une des revendications 16 ou 17, **caractérisé en ce que** l'élément de blocage (28) forme un composant d'une seule pièce et en continuité de matière avec l'une des grilles (25, 26).

19. Palier hydraulique selon l'une des revendications 16 ou 17, **caractérisé en ce que** l'élément de blocage (28) est produit séparément des grilles (25, 26) et disposé à l'intérieur du creux (23).

20. Palier hydraulique selon la revendication 19, **caractérisé en ce que** l'élément de blocage (28) est disposé à l'intérieur du creux (23) au moyen d'un élément de serrage (29) déformable par effet élastique.

21. Palier hydraulique selon la revendication 20, **caractérisé en ce que** l'élément de serrage (29) présente une caractéristique force/course dégressive.

22. Palier hydraulique selon l'une des revendications 16 à 21, **caractérisé en ce que** l'élément de serrage (29) délimite la percée (9) du côté du pourtour extérieur.

23. Palier hydraulique selon l'une des revendications 16 à 22, **caractérisé en ce que** l'élément de blocage (28) présente une section cylindrique (31) réalisée sous la forme d'un canal d'amortissement (30) qui délimite la percée (9) du côté du pourtour extérieur.

24. Palier hydraulique selon l'une des revendications 1 à 23, **caractérisé en ce que** l'élément de réglage (12) et l'élément de blocage (28) sont couplés du point de vue du fonctionnement technique et peuvent être actionnés ensemble par le mécanisme d'entraînement (11).
